(19) Europäisches Patentamt / European Patent Office / Office européen des brevets

(11) **EP 4 525 297 B1**

(12) **EUROPEAN PATENT SPECIFICATION**

(45) Date of publication and mention of the grant of the patent:
**29.04.2026  Bulletin 2026/18**

(21) Application number: **23803325.2**

(22) Date of filing: **12.04.2023**

(51) International Patent Classification (IPC):
*H02P 6/32* (2016.01)   *H02P 6/10* (2006.01)
*H02K 19/12* (2006.01)   *H02P 21/22* (2016.01)
*H02P 21/05* (2006.01)   *H02P 25/03* (2016.01)
*H02P 29/50* (2016.01)

(52) Cooperative Patent Classification (CPC):
**H02P 6/32; H02P 21/05; H02P 25/03; H02P 29/50**

(86) International application number:
**PCT/JP2023/014874**

(87) International publication number:
**WO 2023/218843 (16.11.2023 Gazette 2023/46)**

(54) **CONTROL DEVICE FOR ROTARY ELECTRIC MACHINE**

STEUERUNGSVORRICHTUNG FÜR ELEKTRISCHE DREHMASCHINE

DISPOSITIF DE COMMANDE DE MACHINE ÉLECTRIQUE ROTATIVE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **11.05.2022   JP 2022078284**

(43) Date of publication of application:
**19.03.2025  Bulletin 2025/12**

(73) Proprietor: **DENSO CORPORATION**
**Kariya-city, Aichi 448-8661 (JP)**

(72) Inventor: **SEGUCHI, Masahiro**
**Kariya-city, Aichi 448-8661 (JP)**

(74) Representative: **Kuhnen & Wacker**
**Patent- und Rechtsanwaltsbüro PartG mbB**
**Prinz-Ludwig-Straße 40A**
**85354 Freising (DE)**

(56) References cited:
**EP-A1- 3 496 246      EP-A1- 3 562 009**
**CN-A- 106 972 667      JP-A- 2002 247 899**
**JP-A- 2014 027 807      US-A1- 2016 248 359**

## Description

TECHNICAL FIELD

The present disclosure relates to a control device for a rotary electric machine.

BACKGROUND

Conventionally, as described in, for example, Patent Document 1, a field-winding type rotary electric machine has been known that has a stator including a stator winding and a rotor including a field winding. In the rotary electric machine, the current flowing through the stator winding and the field current flowing through the field winding are controlled in order to control a torque of the rotary electric machine to a command torque.

Patent Document 2 relates to a control device for rotating electrical machine. A rotating electrical machine has a rotor having a field winding and a stator having an armature winding. A control device adjusts a field current flowing in the field winding and an armature current flowing in the armature winding. The armature current flowing in the armature winding is expressed by using a current vector having a d-axis current and a q-axis current in a d-q coordinate system. In a case in which the control device increases the d-axis current to generate a magnetic flux in a direction which is opposite to a direction to generate a magnetic flux by a field current, the control device gradually reduces the d-axis current during a predetermined period of time after increasing the d-axis current in the direction opposite to the direction to generate the magnetic flux by the field current.

PRIOR ART DOCUMENT

PATENT DOCUMENT

    Patent Document 1: JP 2018-102111 A
    Patent Document 2: US 2016/0248359 A1

SUMMARY OF INVENTION

In a field winding type rotary electric machine, the command torque may suddenly increase. In this case, there is a concern that it will take a long time from when the command torque starts to increase suddenly until the torque of the rotary electric machine converges to the command torque.

The main object of the present disclosure is to provide a control device for a field winding type rotary electric machine that can shorten the period from when the command torque of the rotary electric machine begins to increase suddenly until the torque of the rotary electric machine converges to the command torque.

This object is solved by a control device (30) with the feature combination of claim 1. Advantageous developments and embodiments are subject to the claim dependent thereon.

In the present disclosure, a control device for a rotary electric machine that is applied to a system including a rotary electric machine having a stator having a stator winding and a rotor having a field winding includes an operation unit configured to operate a current flowing through the stator winding and a field current flowing through the field winding in order to control a torque of the rotary electric machine to a command torque; and a determination unit configured to determine whether the command torque increases suddenly.

The operation unit increases a degree of excitation of the field winding during a predetermined period from when it is determined that the command torque suddenly increase until the torque of the rotary electric machine converges to the command torque, compared to the degree of excitation of the field winding during a period after the predetermined period.

One of the factors that causes the period from when the command torque begins to increase suddenly until the torque of the rotary electric machine converges to the command torque to be long is that a responsiveness of the field current flowing through the field winding is lower than the responsiveness of the current flowing through the stator winding.

In consideration of this point in the present disclosure, the operation unit increases a degree of excitation of the field winding during a predetermined period from when it is determined that the command torque suddenly increase until the torque of the rotary electric machine converges to the command torque, compared to the degree of excitation of the field winding during a period after the predetermined period. The rise of the field current in the predetermined period is accelerated, and the rate of increase in the torque of the rotary electric machine is increased. As a result, the time required for the torque of the rotary electric machine to converge to the command torque can be shortened.

BRIEF DESCRIPTION OF THE DRAWINGS

The above and other objects, features and advantages of the present disclosure will become more apparent from the following detailed description made with reference to the accompanying drawings. In the drawings,

    FIG. 1 is an overall configuration diagram of a control system for a rotary electric machine;
    FIG. 2 is a diagram showing an inverter and its peripheral configuration;
    FIG. 3 is a cross-sectional view of a rotor and a stator;
    FIG. 4 is a diagram showing a state in which a conductor segments are inserted into a stator core;
    FIG. 5 is a front development view showing a state in which conductor segments are assembled to the stator core;
FIG. 6 is a diagram showing an electric circuit provided in the rotor;
FIG. 7 is a functional block diagram of torque control;
FIG. 8 is a diagram showing changes of a fundamental current and a harmonic current;
FIG. 9 is a flowchart showing a procedure for increasing an amplitude of harmonic currents when a command torque suddenly increases;
FIG. 10 is a diagram showing a relationship between a field weakening current, a field current, and a back electromotive voltage;
FIG. 11 is a time chart showing a torque follow-up effect when a command torque suddenly increases;
FIG. 12 is a time chart showing changes in torque etc. when a command torque suddenly increases in a comparative example;
FIG. 13 is a diagram showing magnetomotive force distribution; and
FIG. 14 is a cross-sectional view of a stator winding according to a comparative example.

DETAILED DESCRIPTION

An embodiment of a control device according to the present disclosure will be described below with reference to the drawings. The control device constitutes a control system for the rotary electric machine, and a control system is mounted on a vehicle. The rotary electric machine is a driving power source of the vehicle.

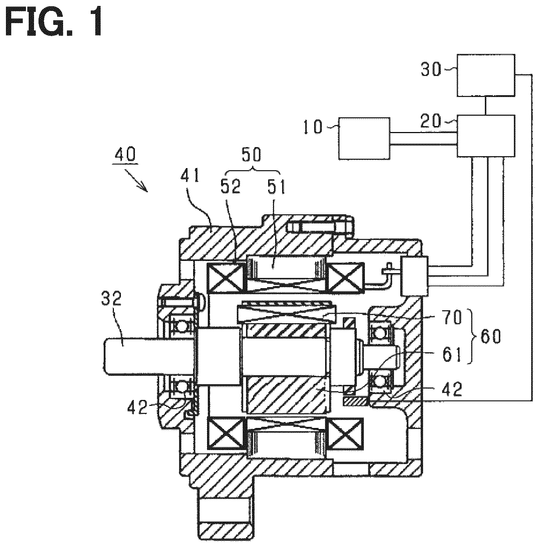

As shown in FIG. 1, the control system includes a DC power supply 10, an inverter 20, a control device 30, and a rotary electric machine 40. The rotary electric machine 40 is a field winding type synchronous machine. For example, the rotary electric machine 40, the inverter 20, and the control device 30 are provided to form an electromechanical integrated drive device, or the rotary electric machine 40, the inverter 20, and the control device 30 are each constituted by respective components.

The rotary electric machine 40 includes a housing 41 and a stator 50 and a rotor 60 that are accommodated within the housing 41. The rotary electric machine 40 of the present embodiment is an inner rotor type rotary electric machine in which the rotor 60 is arranged radially inside the stator 50.

The stator 50 includes a stator core 51 and a stator winding 52. The stator winding 52 is made of copper wire, for example, and includes U-, V-, and W-phase windings 52U, 52V, and 52W arranged with an electrical angle difference of 120 degrees from each other.

The rotor 60 has a rotor core 61 and a field winding 70. The field winding 70 is formed by compression molding, for example. As a result, the space factor is improved and an assembling property of the field winding 70 is improved. The field winding 70 may be made of, for example, an aluminum wire. The aluminum wire has a small specific gravity and can reduce a centrifugal force when the rotor 60 rotates. The aluminum wire has lower strength and hardness than the copper wire and are suitable for compression shaping. Also, the field winding 70 is not limited to the aluminum wire, and may be, for example, a copper wire or a CNT (carbon nanotube). Also, the field winding does not have to be made by compression shaping.

A rotating shaft 32 is inserted through a center hole of the rotor core 61. The rotating shaft 32 is rotatably supported by the housing 41 via bearings 42.

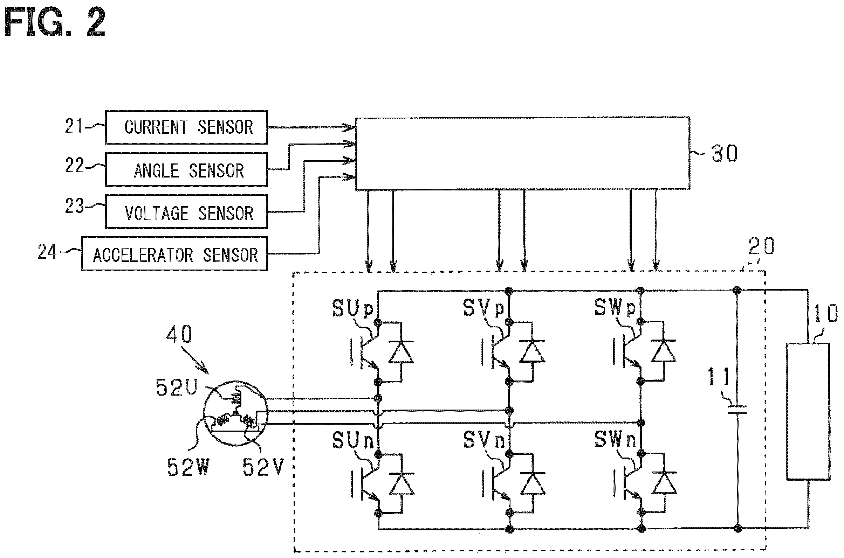

As shown in FIG. 2, the inverter 20 is configured by serially connecting U, V, and W phase upper arm switches SUp, SVp, and SWp and U, V, and W phase lower arm switches SUn, SVn, and SWn. First ends of U-, V-, and W-phase windings 52U, 52V, and 52W are connected to connecting points between U-, V-, and W-phase upper arm switches SUp, SVp, and SWp and U-, V-, and W-phase lower arm switches SUn, SVn, and SWn. The second ends of the U-, V- and W-phase windings 52U, 52V and 52W are connected at a neutral point. That is, in the present embodiment, the U-, V-, and W-phase windings 52U, 52V, and 52W are star-connected. In the present embodiment, each switch SUp to SWn is an IGBT. A freewheel diode is connected in anti-parallel to each of the switches SUp to SWn.

A positive terminal of a DC power supply 10 is connected to the collectors of the U-, V-, and W-phase upper arm switches SUp, SVp, and SWp. A negative terminal of the DC power supply 10 is connected to the emitters of the U-, V-, and W-phase lower arm switches SUn, SVn, and SWn. A smoothing capacitor 11 is connected in parallel with the DC power supply 10.

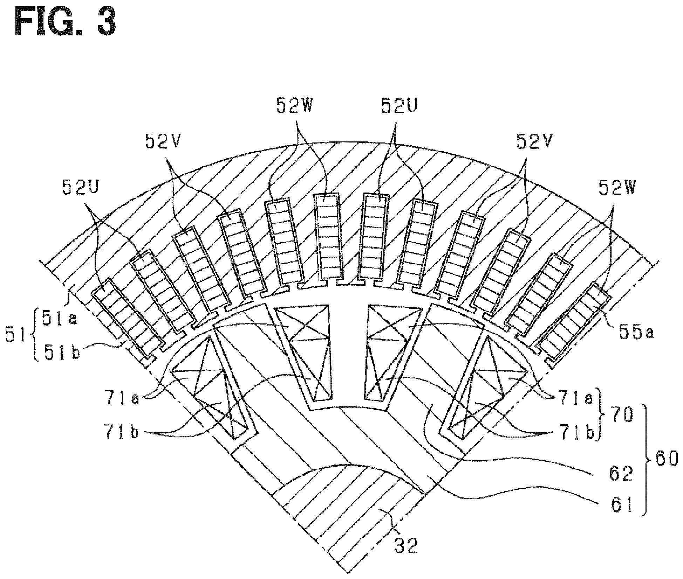

Next, the stator 50 and the rotor 60 will be described with reference to FIG. 3.

Both the stator 50 and the rotor 60 are arranged coaxially with the rotating shaft 32. In the following description, a direction in which the rotating shaft 32 extends is defined as an axial direction, a direction extending radially from the center of the rotating shaft 32 is defined as a radial direction, and a direction extending circumferentially about the rotating shaft 32 is defined as a circumferential direction.

The stator 50 is configured from laminated steel plates made of soft magnetic material, and has an annular back yoke 51a and a plurality of teeth 51b protruding radially inward from the back yoke 51a.

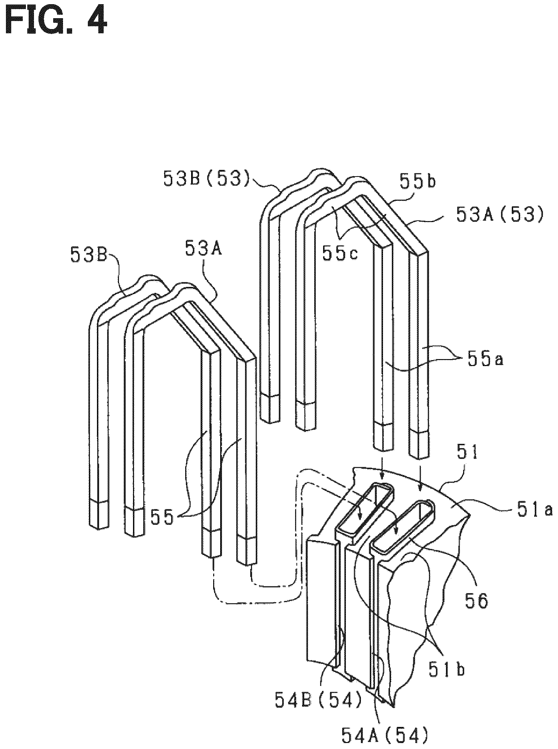

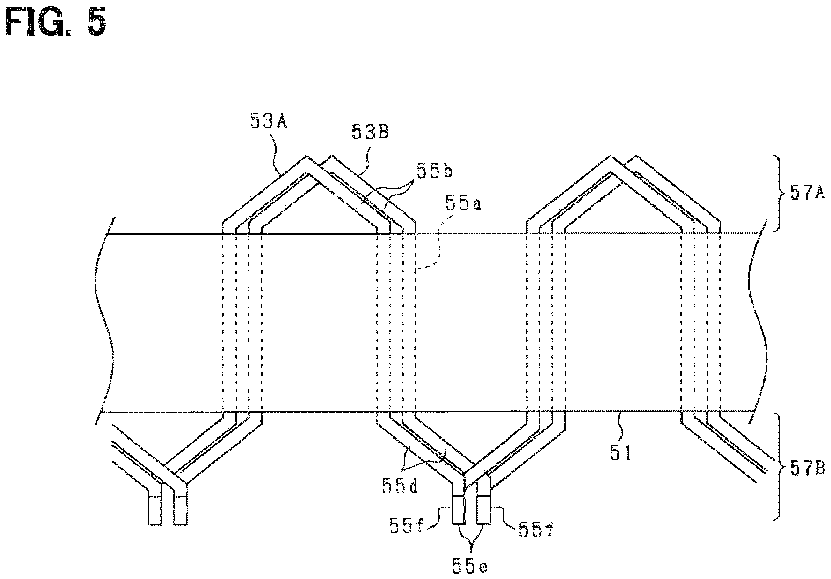

In the present embodiment, as shown in Figs. 4 and 5, the stator 50 has a segment coil structure using a plurality of conductor segments 53. FIG. 4 is a diagram showing a state in which conductor segments 53 constituting a stator winding 52 are inserted into a stator core 51. FIG. 5 is a front development view showing a state in which the conductor segments 53 are assembled to the stator core 51. For ease of explanation, FIG. 5 shows the conductor segments 53 of only one of the three phases.

As shown in FIG. 4, a plurality of slots 54 are formed between adjacent teeth 51b and aligned in the circumferential direction. Each slot 54 is made up of a U-phase slot, a V-phase slot, and a W-phase slot, which are repeatedly arranged in a predetermined number (for example, two slots) in the circumferential direction. The slots 54 have an opening shape that extends in the radial direction of the stator core 51. A plurality of conductor segments 53 can be arranged in the slot 54 in the radial direction.

The conductor segment 53 is substantially U-shaped and has a pair of straight portions 55a and a turn portion 55b that is bent so as to connect the pair of straight portions 55a to each other. The pair of straight portions 55a has a length greater than a thickness in the axial direction of the stator core 51. The turn portion 55b has a pair of inclined portions 55c that are inclined at a predetermined angle with respect to the end surface of the stator core 51. The conductor segment 53 is made of a rectangular wire having a conductor with a rectangular cross section covered with an insulating film, and is formed by plastically deforming the wire into a substantially U-shape.

In the stator core 51, a plurality of conductor segments 53 are inserted into the slots 54 while being aligned in a row in the radial direction. A pair of straight portions 55a of the conductor segment 53 are each positioned at different radial positions within the slot 54, with one straight portion 55a being positioned in the nth layer in the radial direction and the other straight portion 55a being positioned in the n+1th layer. The stator core 51 is provided with, for example, two slots 54A, 54B adjacent to each other in the circumferential direction and of the same phase, and a pair of conductor segments 53A, 53B are inserted into the slots 54A, 54B. In this case, the straight portions 55a of the two conductor segments 53A, 53B are inserted into the slots 54 spaced apart by one magnetic pole pitch, while being shifted by one slot in the circumferential direction. An insulating sheet 56 is provided within the slot 54 to electrically insulate between the stator core 51 and the conductor segment 53.

As shown in FIG. 5, the conductor segments 53 are arranged in a circumferential direction on a stator core 51. Of the two axial ends of the conductor segment 53, one side is a coil end 57A and the other side is a coil end 57B. The coil end 57A is formed by the turn portion 55b of the conductor segment 53. In addition, the coil end 57B is formed by joining the ends of a pair of straight portions 55a of the conductor segments 53 opposite the turn portions 55b to each other, with different conductor segments 53 being joined together.

With regard to the coil end 57B in more detail, in the conductor segment 53, the ends of a pair of straight portions 55a extending axially outward from the stator core 51 are twisted in opposite circumferential directions so as to extend obliquely at a predetermined angle relative to the end face of the stator core 51, forming twisted portions 55d having a length of approximately half a magnetic pole pitch. Ends of each two twisted portions 55d of the conductor segment 53 are joined together by welding to form a joint portion 55e. At the joint portion 55e, the ends of the conductor segments 53 are conductor exposed portions 55f that are exposed from the insulating coating, and the conductor exposed portions 55f are joined to each other in an overlapping state. As a result, the windings of each phase are wave-wound on the stator core 51.

Returning to the explanation of FIG. 3, the rotor 60 is made of a soft magnetic material, such as laminated steel plates. The rotor 60 has a cylindrical rotor core 61 and a plurality of main pole portions 62 that protrude radially outward from the rotor core 61. In the present embodiment, eight main pole portions 62 are provided at regular intervals in the circumferential direction.

The field winding 70 has a first winding portion 71a and a second winding portion 71b. In each main pole portion 62, the first winding portion 71a is wound radially outward, and the second winding portion 71b is wound radially inward of the first winding portion 71a. In each main pole portion 62, the winding directions of the first winding portion 71a and the second winding portion 71b are the same. Moreover, in the main pole portions 62 adjacent in the circumferential direction, the winding direction of the winding portions 71a and 71b wound on one main pole portion 62 is opposite to the winding direction of the winding portions 71a and 71b wound on the other main pole portion 62. Therefore, the magnetization directions of the main pole portions 62 adjacent to each other in the circumferential direction are opposite to each other.

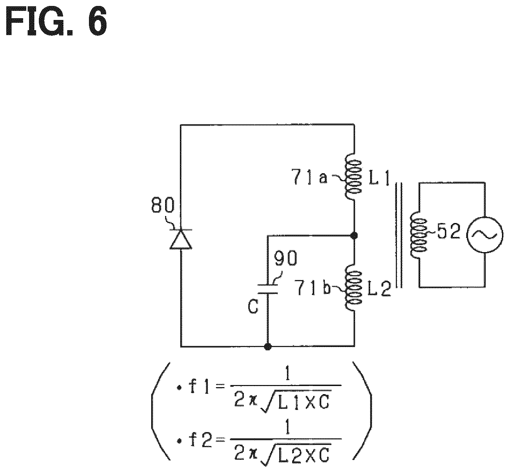

FIG. 6 shows an electric circuit on the rotor 60 side, which includes the winding portions 71a and 71b wound around the common main pole portion 62. The rotor 60 is provided with a diode 80 as a rectifying element and a capacitor 90. A cathode of the diode 80 is connected to the first end of the first winding portion 71a, and the second end of the first winding portion 71a is connected to the first end of the second winding portion 71b. An anode of the diode 80 is connected to the second end of the second winding portion 71b. The capacitor 90 is connected in parallel to the second winding portion 71b. In FIG. 6, L1 indicates the inductance of the first winding portion 71a, L2 indicates the inductance of the second winding portion 71b, and C indicates the capacitance of the capacitor 90.

In the present embodiment, a series resonance circuit is configured by the first winding portion 71a, the capacitor 90 and the diode 80, and a parallel resonance circuit is configured by the second winding portion 71b and the capacitor 90. A first resonance frequency that is the resonance frequency of the series resonance circuit is referred to as f1, and a second resonance frequency that is the resonance frequency of the parallel resonance circuit is referred to as f2. The resonance frequency f1 and the resonance frequency f2 are represented by the following equations (eq1) and (eq2).
[Equation 1]

$$f1 = 1/2\pi\sqrt{(L1*C)} \dots (eq1)$$

[Equation 2]

$$f2 = 1/2\pi\sqrt{(L2*C)} \dots (eq2)$$

Returning to the explanation of FIG. 2, the control system includes a current sensor 21, an angle sensor 22, a voltage sensor 23 and an accelerator sensor 24. The current sensor 21 detects at least two phases of current among the phase currents flowing through the rotary electric machine 40. The angle sensor 22 detects the rotation angle (electrical angle) of the rotor 60. The voltage sensor 23 includes a sensor that detects the voltage of the DC power supply 10, and a sensor that detects the back electromotive voltage of each of the phase windings 52U to 52W. The accelerator sensor 24 detects the amount of operation of an accelerator operating member (specifically, an accelerator pedal) operated by the driver of the vehicle. The detection values of the sensors 21 to 24 are input to the control device 30.

The control device 30 corresponds to an "operation unit" and generates drive signals for turning on and off the switches SUp to SWn that configure the inverter 20. Specifically, in order to convert the DC power output from the DC power supply 10 into AC power and supply it to the U-, V-, and W-phase windings 52U, 52V, and 52W, the control device 30 generates drive signals for turning on and off each of the arm switches SUp to SWn, and supplies the generated drive signals to the gates of each of the arm switches SUp to SWn.

The control device 30 turns on and off each of the switches SUp to SWn so that the composite current of the fundamental wave current and the harmonic current flows through the phase windings 52U, 52V, and 52W. The fundamental wave current is a current that mainly causes the rotary electric machine 40 to generate torque. The harmonic current is a current that mainly excites the field winding 70. The phase currents flowing through each of the phase windings 52U, 52V, and 52W are shifted by an electrical angle of 120°.

A part or all of each function of the control device 30 may be configured in hardware by, for example, one or a plurality of integrated circuits. Further, each function of the control device 30 may be configured by, for example, software recorded in a non-transitional substantive recording medium and a computer executing the software.

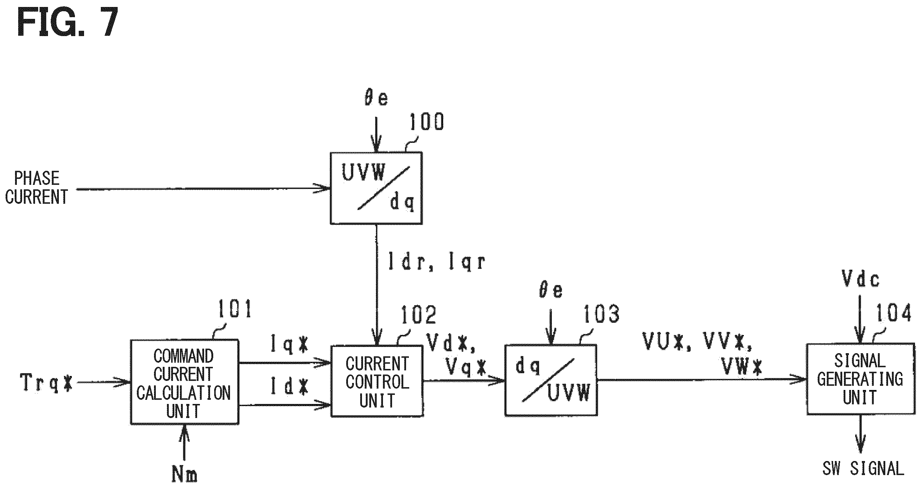

The torque control of the rotary electric machine 40 executed by the control device 30 will be described with reference to FIG. 7.

A two-phase conversion unit 100 converts U-phase, V-phase, and W-phase currents in a three-phase fixed coordinate system into a d-axis current Idr and a q-axis current Iqr in a two-phase rotating coordinate system (d-q coordinate system) based on a detection value of the current sensor 21 and an electrical angle θe detected by the angle sensor 22.

A command current calculation unit 101 calculates d-axis and q-axis command currents Id* and Iq* based on the command torque Trq*. The d-axis and q-axis command currents Id* and Iq* have values that reflect the fundamental wave current and the harmonic current that excites the field winding 70. In detail, the command current calculation unit 101 calculates the d-axis and q-axis command currents Id* and Iq* based on the command torque Trq* and map information in which the command torque Trq* and the d-axis and q-axis command currents Id* and Iq* are correlated with each other. Here, the command torque Trq* is set to be larger as the accelerator operation amount detected by the accelerator sensor 24 is larger. When the rotation speed Nm of the rotor 60 increases and enters the field weakening region, the command current calculation unit 101 sets the d-axis command current Id* so that field weakening control is executed. The current control unit 102 increases the d-axis command current Id* in a negative direction in the field weakening region. The rotation speed Nm of the rotor 60 may be calculated based on the detection value of the angle sensor 22.

The current control unit 102 calculates a d-axis current deviation ΔId by subtracting the d-axis current Idr from the d-axis command current Id*. The current control unit 102 calculates a q-axis current deviation ΔIq by subtracting the q-axis current Iqr from the q-axis command current Iq*.

The current control unit 102 calculates a d-axis command voltage Vd* as an operation amount for feedback-controlling the d-axis current Idr to the d-axis command current Id* based on the d-axis current deviation ΔId*. The current control unit 102 calculates a q-axis command voltage Vq* as an operation amount for feedback-controlling the q-axis current Iqr to the q-axis command current Iq* based on the q-axis current deviation ΔIq.

A three-phase conversion unit 103 converts the d-axis and q-axis command voltages Vd, Vq in the two-phase rotating coordinate system into U-, V-, and W-phase voltage command values VU*, VV*, and VW* in the three-phase fixed coordinate system based on the d-axis and q-axis command voltages Vd*, Vq* and the electrical angle θe. The U-, V-, and W-phase voltage command values VU*, VV*, and VW* have waveforms that are shifted in phase by 120 degrees in electrical angle.

The frequencies of the harmonic components contained in the U-, V-, and W-phase voltage command values VU*, VV*, and VW* are set to frequencies near the first resonant frequency f1 or near the second resonant frequency f2. As a result, the excitation can be enhanced to reduce the amplitude of the harmonic current, and the torque ripple of the rotary electric machine 40 can be reduced.

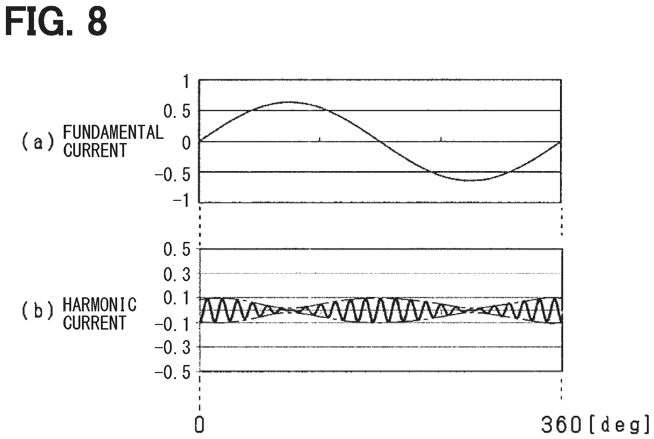

As shown in FIG. 8, the envelope of the harmonic current has a period half that of the fundamental current. The envelope is shown by a dashed line in FIG. 8(b). The values on the vertical axis shown in FIG. 8 indicate a relative relationship between the magnitudes of the waveforms shown in FIGS. 8(a) and 8(b). The timing at which the envelope reaches its peak value is shifted from the timing at which the fundamental wave current reaches its peak value. Specifically, the timing at which the envelope curve reaches its peak value is set to the timing at which the fundamental wave current reaches its fluctuation center (0).

The timing at which the envelope of the harmonic current reaches its peak value may be, for example, the timing at which the fundamental current reaches its peak value.

Returning to the explanation of FIG. 7, the signal generating unit 104 generates drive signals for the upper and lower arm switches of the U, V and W phases by three-phase modulation based on the U, V and W phase voltage command values VU*, VV*, VW* and the voltage Vdc of the DC power supply 10 detected by the voltage sensor 23. The generated drive signal is input to the gate of each switch. Accordingly, the switching operation of the inverter 20 is executed.

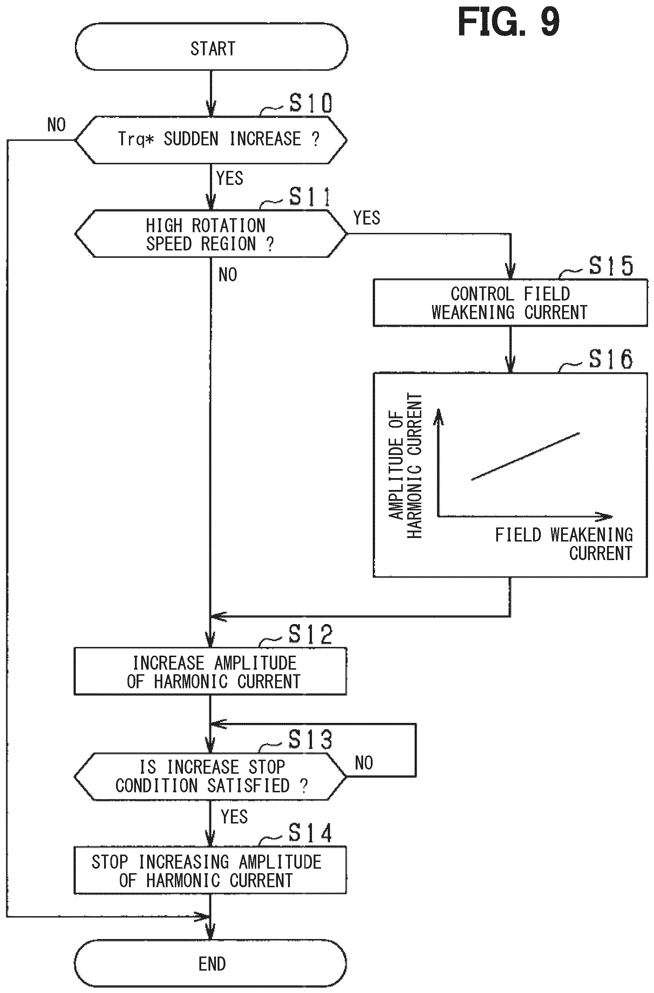

When the control device 30 determines that the command torque Trq* increases suddenly, of the transient period that is the period from when it is determined that there is a sudden increase until the torque of the rotary electric machine 40 converges to the command torque Trq*, the control device 30 performs processing to make the degree of excitation of the field winding 70 during a predetermined period after it is determined that the command torque Trq* increases suddenly larger than the degree of excitation in a period after a predetermined period of the transition period. This processing is intended to shorten the period until the torque of the rotary electric machine 40 converges to the command torque Trq*. FIG. 9 shows the procedure for this processing.

In step S10, it is determined whether or not the command torque Trq* has increased suddenly. For example, when it is determined that the increase in the accelerator operation amount detected by the accelerator sensor 24 has exceeded a first predetermined amount ΔAcc, it may be determined that the command torque Trq* has increased suddenly. Also, for example, when it is determined that the increase amount of the acquired command torque Trq* exceeds a second predetermined amount ΔTrq, it may be determined that the command torque Trq* has increased suddenly. The processing of step S10 corresponds to a "determination unit".

When a negative judgment is made in step S10, the command current calculation unit 101 calculates the d-axis and q-axis command currents Id* and Iq* based on the command torque Trq* and map information in which the command torque Trq* and the d-axis and q-axis command currents Id* and Iq* are correlated.

On the other hand, when it is determined in step S10 that there has been a sudden increase, the process proceeds to step S11, where it is determined whether the rotation speed Nm of the rotor 60 is equal to or higher than a predetermined rotation speed (for example, 6000 rpm). The process of step S11 is a process for determining whether or not it is a situation in which field-weakening control should be performed.

When it is determined in step S11 that the rotation speed Nm is less than the predetermined rotation speed, the process proceeds to step S12. In step S12, at least one of the d-axis and q-axis command currents Id* and Iq* in the command current calculation unit 101 is changed so that a harmonic current having an amplitude increased beyond the amplitude of the harmonic current determined from the command torque Trq* and the d-axis and q-axis command currents Id* and Iq* based on the map information is passed through the stator winding 52. As a result, the amplitude of the harmonic current flowing through the stator winding 52 increases, and the degree of excitation of the field winding 70 becomes greater than the degree of excitation of the field winding 70 determined based on the current command torque Trq* and the map information.

In step S13, it is determined whether or not an increase stop condition for returning the amplitude of the harmonic current to the amplitude of the harmonic current determined based on the command torque Trq* and the map information is satisfied.

For example, when it is determined that the current field current has become the field current expected when a harmonic current determined based on the current command torque Trq* and the map information flows, it may be determined that the increase stop condition is satisfied. In this case, the current field current may be an estimated value or a detected value. When the estimated value is used, the estimated value may be calculated based on the voltage (back electromotive voltage) detected by the voltage sensor 23, for example.

Also, for example, the time that has elapsed since the positive determination in step S10 is counted, and it may be determined that the increase stop condition is satisfied when it is determined that the counted elapsed time has reached a determination value. The determination value is a value for determining whether the current field current has become the above-mentioned expected field current.

When it is determined in step S13 that the increase stop condition is satisfied, the process proceeds to step S14, where the control is returned according to the command torque Trq* and the d-axis and q-axis command currents Id* and Iq* based on the map information.

On the other hand, when it is determined in step S11 that the rotation speed Nm of the rotor 60 is equal to or higher than the predetermined rotation speed, it is determined that a situation exists in which field-weakening control should be performed, and the process proceeds to step S15. In step S15, the current control unit 102 calculates the d-axis command current Id* (<0) so that a field-weakening current flows through the stator winding 52.

In step S16, at least one of the d-axis and q-axis command currents Id* and Iq* is changed so that the amplitude of the harmonic current in step S12 is increased as the magnitude of the calculated d-axis command current Id* (i.e., the field weakening current) increases.

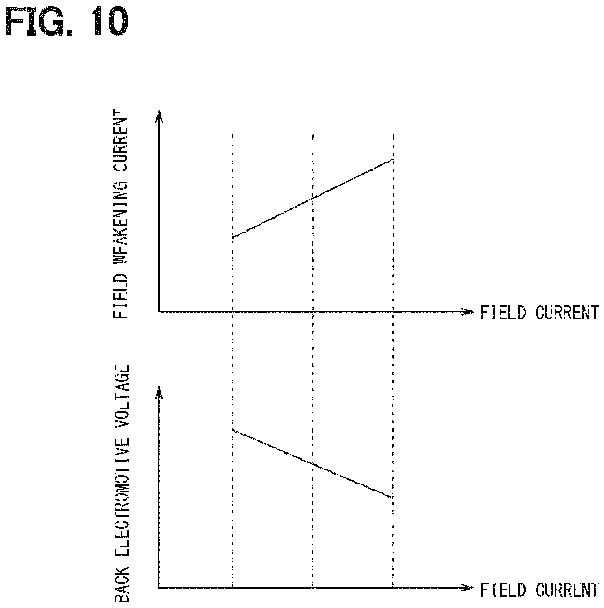

As shown in FIG. 10, the larger the field weakening current is, the larger the field current can be made. When the field weakening current is large, the back electromotive voltage generated in the stator winding 52 will be low even if the field current is increased. In other words, the larger the field weakening current is, the lower the back electromotive voltage is, and the greater the margin of the voltage of the DC power supply 10 against the back electromotive voltage is. Therefore, the larger the field weakening current is, the larger the amplitude of the harmonic current is made, and the greater the degree of excitation of the field winding 70 is made.

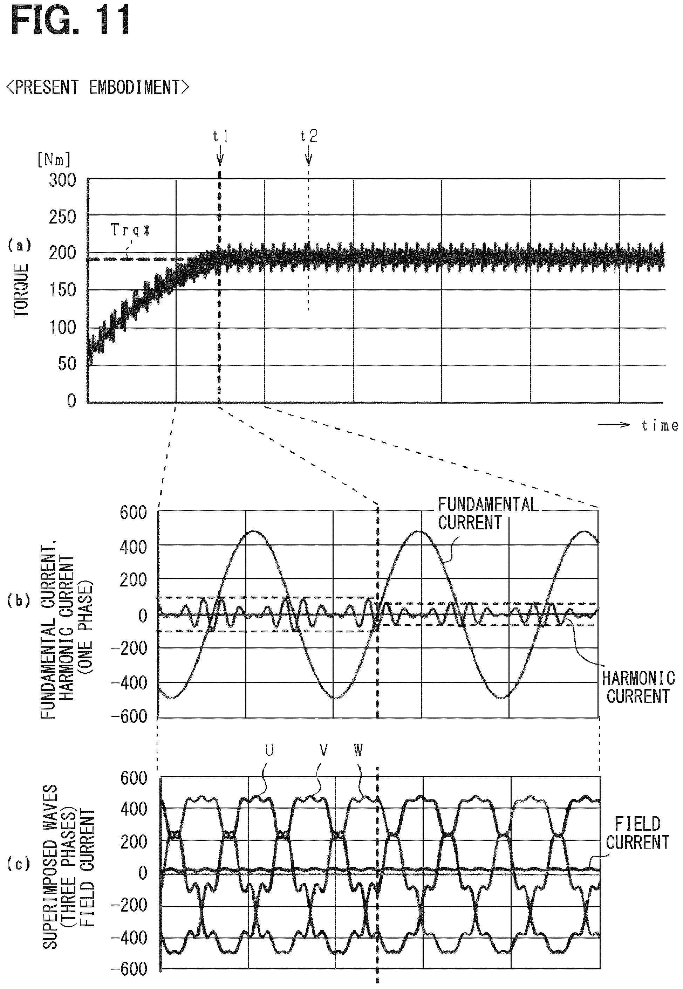

FIG. 11 shows an example of a processing for increasing the amplitude of a harmonic current. FIG. 11(a) shows a transition of the torque of the rotary electric machine 40. FIG. 11(b) shows a transition of the actual fundamental current and harmonic current for one phase applied to the stator winding 52. FIG. 11(c) shows a transition of the combined current of the actual fundamental current and harmonic currents for three phases applied to the stator winding 52 and a transition of the field current flowing through the field winding 70.

At a timing prior to time t1, the control device 30 determines that the command torque Trq* has increased suddenly. Therefore, the control device 30 increases the amplitude of the harmonic current.

At time t1, the control device 30 determines that the increase stop condition is satisfied. Therefore, the control device 30 returns the amplitude of the harmonic current to an amplitude determined based on the current command torque Trq* and the map information. As a result, as shown in FIG. 11(b), the effective value of the harmonic current after time t1 becomes smaller than the effective value of the harmonic current before time t1. After that, at time t2, the torque of the rotary electric machine 40 (for example, the time average value of the torque) converges to the command torque Trq*.

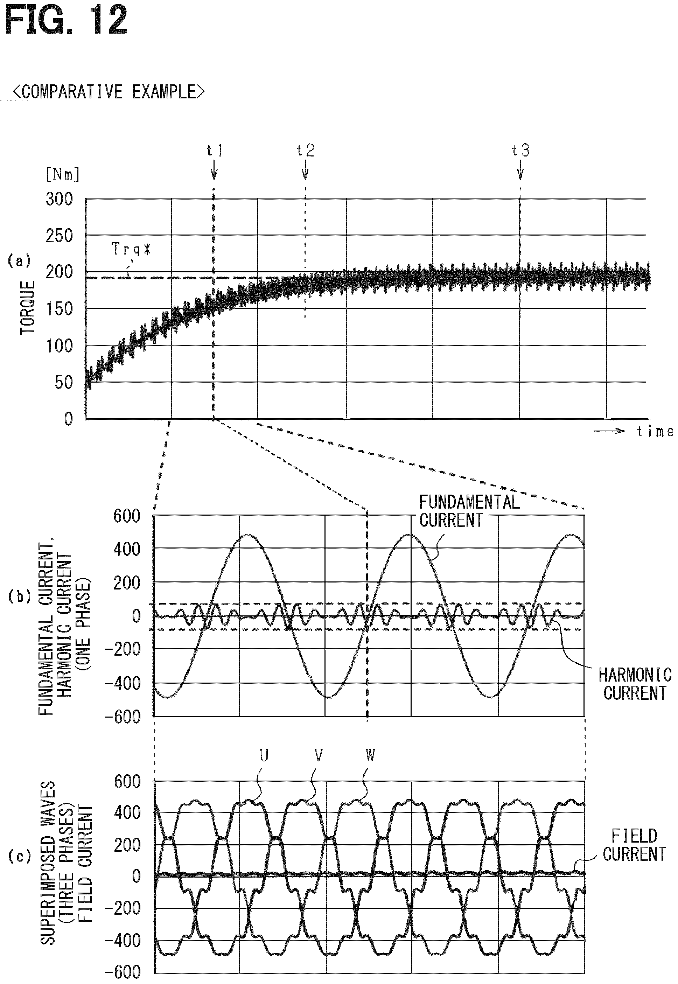

FIG. 12 shows an example according to a comparative example. The comparative example is configured to maintain the amplitude of the harmonic current at an amplitude determined based on the current command torque Trq* and the map information before and after a sudden increase in the command torque Trq*.

In the comparative example, the amplitude of the harmonic current is not temporarily increased. Therefore, the field current at the timing immediately before time t1 is smaller than the field current of the present embodiment at the timing immediately before time t1 shown in FIG. 11. As a result, the timing (t3) at which the torque of the rotary electric machine 40 converges to the command torque Trq* is significantly delayed compared to the convergence timing (t2) in the present embodiment.

As described above, according to the present embodiment, the degree of excitation of the field winding 70 after a sudden increase in the command torque Trq* can be increased, and therefore the rate at which the magnetic flux amount of the rotor 60 increases can be increased. According to this configuration, the rate at which the torque of the rotary electric machine 40 increases can be increased, and the period until the torque of the rotary electric machine 40 converges to the command torque Trq* can be shortened.

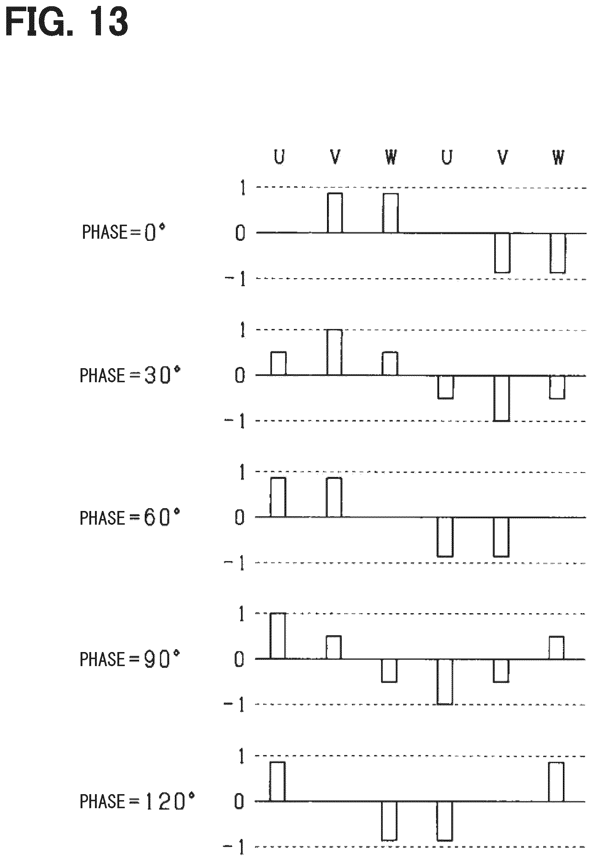

In the present embodiment, the conductor segments 53 as shown in FIGS. 3 and 4. The cross-sectional shape of the straight portion 55a of the conductor segment 53 is symmetrical with respect to the central axis of the slot 54. As a result, as shown in FIG. 13, the magnetomotive force distribution at each pole becomes close to a sine wave, and when the rotor 60 is excited from the stator 50 side, uniform excitation can be achieved at the field poles, effectively increasing the degree of excitation of the field winding 70. FIG. 13 shows the transition of the magnetomotive force distribution of each phase for two magnetic poles when the electrical angle advances by 30 degrees at a time. In FIG. 13, the maximum value of the magnetomotive force is normalized to 1.

Furthermore, since the magnetomotive force distribution is close to a sine wave, when the field poles of the rotor 60 are excited from the stator 50 side, even if the relative position of the field winding 70 with respect to the main pole portion 62 is slightly shifted, the decrease in the degree of excitation of the field winding 70 is small. The phase of the harmonic current relative to the fundamental current can be set redundantly.

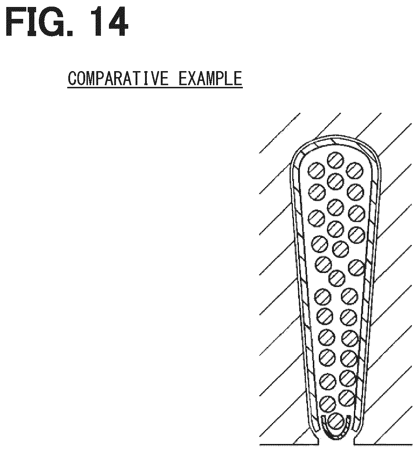

In contrast, in the case of inserter winding using a round wire as shown in FIG. 14, the symmetry of the distribution of the round wire with respect to the central axis of the slot is lost. As a result, the magnetomotive force distribution becomes distorted from a sine wave, and the degree of excitation decreases significantly.

\<Other Embodiments\>

The above embodiment may be modified as follows.

In the above embodiment, the amplitude of the harmonic current is changed in two stages. However, the present invention is not limited to this configuration. The amplitude may be changed in three or more stages so that the amplitude (envelope) decreases. In addition, the amplitude is not limited to being changed in stages, but the amplitude may be gradually decreased during the period from when it is determined that the command torque Trq* will suddenly increase until the torque of the rotary electric machine 40 converges to the command torque Trq*.

The second winding portion 71b may be disposed closer to the stator 50 in the radial direction than the first winding portion 71a.

The capacitor 90 forming the resonance circuit may be connected in parallel to the first winding portion 71a instead of the second winding portion 71b. In addition, in the resonant circuit, the anode of the diode 80 may be connected to the first winding portion 71a side, and the cathode of the diode 80 may be connected to the second winding portion 71b side of the series connection of the first and second winding portions 71a, 71b.

The rotary electric machine is not limited to the inner rotor type rotary electric machine, and may be an outer rotor type rotary electric machine. In this case, the main pole portion protrudes radially inward from the rotor core.

The rotary electric machine is not limited to a star-connected rotary electric machine, and may be a delta-connected rotary electric machine.

The stator core may be a stator core having no teeth.

The configuration for passing the field current through the field winding is not limited to the circuit shown in FIG. 6, for example, may be a configuration having a brush electrically connected to the field winding and a power supply. In this case, during the period from when it is determined in step S10 of FIG. 9 that there will be a sudden increase until it is determined in step S13 that the increase stop condition is satisfied, the control device controls the output voltage of the power source electrically connected to the brush to a first voltage, and after it is determined that the increase stop condition is satisfied, it controls the output voltage of the power source to a second voltage lower than the first voltage. The degree of excitation of the field winding during the output period of the first voltage can be made greater than the degree of excitation of the field winding during the output period of the second voltage. When brushes are used, it is not necessary to flow the harmonic currents through the stator windings to induce field currents.

The rotary electric machine is not limited to a rotary electric machine used as a vehicle-mounted main machine, and may be, for example, a rotating electric machine used as an ISG (Integrated Starter Generator) that has function as a motor and generator.

The mobile object on which the control system is mounted is not limited to a vehicle, and may be, for example, an aircraft or a ship. Further, the control system is not limited to a system mounted on a moving body, and may be a system mounted on a stationary body.

The control devices and methods thereof described in the present disclosure may be implemented by a dedicated computer including a processor programmed to execute one or more functions embodied by a computer program and a memory. Alternatively, the control devices and the methods thereof described in the present disclosure may be implemented by a dedicated computer including a processor with one or more dedicated hardware logic circuits. Alternatively, the control circuit and method described in the present disclosure may be realized by one or more dedicated computer, which is configured as a combination of a processor and a memory, which are programmed to perform one or more functions, and a processor which is configured with one or more hardware logic circuits. The computer programs may be stored, as instructions to be executed by a computer, in a tangible non-transitory computer-readable medium.

Although the present disclosure has been described in accordance with the examples, it is understood that the present disclosure is not limited to such examples or structures. The present disclosure encompasses various modifications and variations within the scope of protection. In addition, while the various combinations and configurations, which are preferred, other combinations and configurations, including more, less or only a single element, are also within the scope of protection as defined by the accompanying claims.

**Claims**

1.  A control device (30) for a rotary electric machine for a system including the rotary electric machine (40) having a stator (50) having a stator winding (52) and a rotor (60) having a field winding (70), the control device, comprising:

    an operation unit configured to operate a current flowing through the stator winding and a field current flowing through the field winding in order to control a torque of the rotary electric machine to a command torque; and
    a determination unit configured to determine whether the command torque increases suddenly;
    wherein
    the operation unit is configured to increase a degree of excitation of the field winding during a predetermined period from when it is determined that the command torque suddenly increase until the torque of the rotary electric machine converges to the command torque, compared to the degree of excitation of the field winding during a period after the predetermined period, wherein
    the system includes an inverter (20) electrically connected to the stator winding,
    the rotor has a rotor core (61) and main pole portions (62) that are provided at predetermined intervals in a circumferential direction and protrude radially from the rotor core,
    the field winding has a series connection of a first winding portion (71a) and a second winding portion (71b),
    the first winding portion and the second winding portion are wound around each of the main pole portions,
    the rotor includes

a diode (80), and

a capacitor (90) connected in parallel to either the first winding portion or the second winding portion,

one end of the diode is connected to the first winding portion side of both ends of the series connection, and the other end of the diode is connected to the second winding portion side of the series connection, and

the operation unit is configured to perform a switching operation of the inverter so as to cause a fundamental current corresponding to the command torque to flow through the stator winding, and also to cause a harmonic current corresponding to the command torque to flow through the stator winding, the harmonic current being for inducing the field current in the field winding, and

by making an amplitude of the harmonic current in the predetermined period greater than the amplitude of the harmonic current in a period after the predetermined period, the operation unit is configured to make the degree of excitation of the field winding in the predetermined period greater than the degree of excitation of the field winding in a period after the predetermined period, wherein

the operation unit is configured to perform a switching operation of the inverter so as to flow a field weakening current through the stator winding when a rotation speed of the rotor is equal to or higher than a predetermined rotation speed, and wherein

when the rotation speed of the rotor is equal to or higher than the predetermined rotation speed, the operation unit is configured to increase the amplitude of the harmonic current as the field weakening current increases.

2. The control device for the rotary electric machine according to claim 1, wherein the stator includes

an annular stator core (51a), and

teeth (51b) protruding from the stator core toward the rotor in a radial direction,

a slot (54) is formed between the teeth adjacent in the circumferential direction,

the stator winding is a rectangular wire having a rectangular cross-sectional shape, and

in each slot, the rectangular wires are arranged in a row in the radial direction.

**Patentansprüche**

1. Eine Steuervorrichtung (30) für eine rotierende elektrische Maschine für ein System, das die rotierende elektrische Maschine (40) mit einem Stator (50) mit einer Statorwicklung (52) und einem Rotor (60) mit einer Feldwicklung (70) umfasst, wobei die Steuervorrichtung umfasst:

eine Betriebseinheit, welche derart konfiguriert ist, dass sie einen durch die Statorwicklung fließenden Strom und einen durch die Feldwicklung fließenden Feldstrom betreibt, um ein Drehmoment der rotierenden elektrischen Maschine auf ein Soll-Drehmoment zu regeln; und eine Bestimmungseinheit, welche derart konfiguriert ist, dass sie bestimmt, ob das Soll-Drehmoment plötzlich ansteigt;

wobei

die Betriebseinheit derart konfiguriert ist, dass sie den Erregungsgrad der Feldwicklung während eines vorbestimmten Zeitraums von dem Zeitpunkt, zu dem festgestellt wird, dass das Soll-Drehmoment plötzlich ansteigt, bis zu dem Zeitpunkt, zu dem das Drehmoment der elektrischen Drehmaschine dem Soll-Drehmoment konvergiert, im Vergleich zum Erregungsgrad der Feldwicklung während eines Zeitraums nach dem vorbestimmten Zeitraum erhöht, wobei

das System einen Wechselrichter (20) umfasst, der elektrisch mit der Statorwicklung verbunden ist,

der Rotor einen Rotorkern (61) und Hauptpolabschnitte (62) aufweist, die in vorbestimmten Abständen in Umfangsrichtung vorgesehen sind und radial aus dem Rotorkern herausragen,

die Feldwicklung eine Reihenschaltung eines ersten Wicklungsabschnitts (71a) und eines zweiten Wicklungsabschnitts (71b) aufweist,

der erste Wicklungsabschnitt und der zweite Wicklungsabschnitt um jeden der Hauptpolabschnitte gewickelt sind,

der Rotor umfasst

eine Diode (80), und

einen Kondensator (90), der parallel zu entweder dem ersten Wicklungsabschnitt oder dem zweiten Wicklungsabschnitt geschaltet ist,

ein Ende der Diode mit der ersten Wicklungsabschnittseite beider Enden der Reihenschaltung verbunden ist, und das andere Ende der Diode mit der zweiten Wicklungsseite der Reihenschaltung verbunden ist, und

die Betriebseinheit

ist derart konfiguriert, dass sie einen Schaltvorgang des Wechselrichters ausführt, um einen Grundstrom, der dem Soll-Drehmoment entspricht, durch die Statorwicklung fließen zu lassen, und um außerdem einen Oberschwingungsstrom, der dem Soll-Drehmoment entspricht, durch die Statorwicklung fließen zu lassen, wobei der Oberwellenstrom dazu dient, den Feldstrom in der Feldwicklung zu induzieren, und

indem die Amplitude des Oberwellenstroms in dem vorbestimmten Zeitraum größer als die Amplitude des Oberwellenstroms in einem Zeitraum nach dem vorbestimmten Zeitraum gemacht wird, ist die Betriebseinheit derart konfiguriert, dass sie den Erregungsgrad der Feldwicklung in dem vorbestimmten Zeitraum größer als den Erregungsgrad der Feldwicklung in einem Zeitraum nach dem vorbestimmten Zeitraum macht, wobei

die Betriebseinheit derart konfiguriert ist, dass sie einen Schaltvorgang des Wechselrichters ausführt, um einen Feldschwächungsstrom durch die Statorwicklung fließen zu lassen, wenn eine Drehzahl des Rotors gleich oder höher als eine vorbestimmte Drehzahl ist, und wobei

wenn die Drehzahl des Rotors gleich oder höher als die vorbestimmte Drehzahl ist, die Betriebseinheit derart konfiguriert ist, dass sie die Amplitude des harmonischen Stroms erhöht, wenn der Feldschwächungsstrom zunimmt.

2. Die Steuervorrichtung für die rotierende elektrische Maschine nach Anspruch 1, wobei

der Stator umfasst

einen ringförmigen Statorkern (51a), und Zähne (51b) aufweist, die vom Statorkern in radialer Richtung zum Rotor hin vorstehen,

einen Schlitz (54), welcher zwischen den in Umfangsrichtung benachbarten Zähnen ausgebildet ist,
die Statorwicklung ein rechteckiger Draht mit rechteckigem Querschnitt ist, und
in jedem Schlitz die rechteckigen Drähte in radialer Richtung in einer Reihe angeordnet sind.

**Revendications**

1. Un dispositif de commande (30) pour une machine électrique rotative destinée à un système comprenant la machine électrique rotative (40) comportant un stator (50) avec un enroulement statorique (52) et un rotor (60) avec un enroulement de champ (70), le dispositif de commande comprenant :

une unité de fonctionnement configurée pour faire fonctionner un courant circulant à travers l'enroulement statorique et un courant de champ circulant à travers l'enroulement de champ afin de commander un couple de la machine électrique rotative à un couple de commande ; et
une unité de détermination configurée pour déterminer si le couple de commande augmente soudainement ;
dans lequel
l'unité de fonctionnement est configurée pour augmenter le degré d'excitation de l'enroulement de champ pendant une période prédéterminée à partir du moment où il est déterminé que le couple de commande augmente soudainement jusqu'à ce que le couple de la machine électrique rotative converge vers le couple de commande, par rapport au degré d'excitation de l'enroulement de champ pendant une période après la période prédéterminée, dans lequel
le système comprend un onduleur (20) connecté électriquement à l'enroulement statorique,
le rotor comporte un noyau de rotor (61) et des parties polaires principales (62) qui sont prévues à des intervalles prédéterminés dans une direction circonférentielle et font saillie radialement à partir du noyau de rotor,
l'enroulement de champ comporte une connexion en série d'une première partie d'enroulement (71a) et d'une deuxième partie d'enroulement (71b),
la première partie d'enroulement et la deuxième partie d'enroulement sont enroulées autour de chacune des parties polaires principales,
le rotor comprend

une diode (80), et
un condensateur (90) connecté en parallèle à la première partie d'enroulement ou à la deuxième partie d'enroulement,

une extrémité de la diode est connectée au côté de la première partie d'enroulement des deux extrémités de la connexion en série, et l'autre extrémité de la diode est connectée au côté de la deuxième partie d'enroulement de la connexion en série, et
l'unité de commande
est configurée pour effectuer une opération de commutation de l'onduleur de manière à faire circuler un courant fondamental correspondant au couple de commande à travers l'enroulement du stator, et également à faire circuler un courant harmonique correspondant au couple de commande à travers l'enroulement du stator, le courant harmonique servant à induire le courant de champ dans l'enroulement de champ, et
en rendant l'amplitude du courant harmonique dans la période prédéterminée supérieure à l'amplitude du courant harmonique dans une période après la période prédéterminée, l'unité de commande est configurée pour rendre le degré d'excitation de l'enroulement de champ dans la période prédéterminée supérieur au degré d'excitation de l'enroulement de champ dans une période après la période prédéterminée, dans laquelle

l'unité de commande est configurée pour effectuer une opération de commutation de l'onduleur de manière à faire circuler un courant d'affaiblissement de champ à travers l'enroulement statorique lorsque la vitesse de rotation du rotor est égale ou supérieure à une vitesse de rotation prédéterminée, et dans lequel

lorsque la vitesse de rotation du rotor est égale ou supérieure à la vitesse de rotation prédéterminée, l'unité de commande est configurée pour augmenter l'amplitude du courant harmonique à mesure que le courant d'affaiblissement de champ augmente.

2. Le dispositif de commande pour machine électrique rotative selon la revendication 1, dans lequel

le stator comprend

un noyau de stator annulaire (51a), et des dents (51b) faisant saillie du noyau de stator vers le rotor dans une direction radiale,

une fente (54) est formée entre les dents adjacentes dans la direction circonférentielle, l'enroulement de stator est un fil rectangulaire ayant une forme en coupe transversale rectangulaire, et

dans chaque fente, les fils rectangulaires sont disposés en rangée dans la direction radiale.

# FIG. 1

# FIG. 2

# FIG. 3

# FIG. 4

# FIG. 5

EP 4 525 297 B1

# FIG. 6

$$\left(\begin{array}{l} \bullet f1 = \dfrac{1}{2\pi\sqrt{L1\times C}} \\[3mm] \bullet f2 = \dfrac{1}{2\pi\sqrt{L2\times C}} \end{array}\right)$$

# FIG. 7

# FIG. 8

(a) FUNDAMENTAL CURRENT

(b) HARMONIC CURRENT

360 [deg]

# FIG. 9

START

S10

Trq* SUDDEN INCREASE ?

NO

YES

S11

HIGH ROTATION SPEED REGION ?

YES

NO

S15

CONTROL FIELD WEAKENING CURRENT

S16

AMPLITUDE OF HARMONIC CURRENT

FIELD WEAKENING CURRENT

S12

INCREASE AMPLITUDE OF HARMONIC CURRENT

S13

IS INCREASE STOP CONDITION SATISFIED ?

NO

YES

S14

STOP INCREASING AMPLITUDE OF HARMONIC CURRENT

END

20

# FIG. 10

# FIG. 11

<PRESENT EMBODIMENT>

# FIG. 12

<COMPARATIVE EXAMPLE>

(a) TORQUE [Nm]

(b) FUNDAMENTAL CURRENT, HARMONIC CURRENT (ONE PHASE)

FUNDAMENTAL CURRENT

HARMONIC CURRENT

(c) SUPERIMPOSED WAVES (THREE PHASES) FIELD CURRENT

FIELD CURRENT

# FIG. 13

# FIG. 14

COMPARATIVE EXAMPLE

**EP 4 525 297 B1**

**Patent documents cited in the description**

- JP 2018102111 A

- US 20160248359 A1